# EUROPEAN PATENT APPLICATION

(11) **EP 4 398 277 A1**
(43) Date of publication of application: **10.07.2024**
(21) Application number: 21786523.7
(22) Date of filing: 31.08.2021
(51) Int. Cl.: H01G 11/02, H01G 11/82, H01G 11/84, H01G 11/80, H01G 11/38, H01M 4/62, H01M 4/13, H01M 10/04, H01M 10/0566, H01M 10/0585, H01G 11/36, H01G 11/12, H01G 11/46, H01G 11/50, H01M 4/133

(54) **HIGHLY EFFICIENT ELECTRICAL CONDUCTIVITY PASTE ELECTRODES AND CELL STACKING FOR HIGH POWER ELECTRICAL ENERGY STORAGE DEVICES**

(71) Applicant: NAPPTILUS BATTERY LABS, S.L. (TITULAR DEL 65%), 08039 Barcelona (ES); Fundació Institut Català de Nanociència i Nanotecnologia (ICN2) - (Titular del 30%), 08193 Bellaterra, Cerdanyola del Vallés, Barcelona (ES); AGENCIA ESTATAL CONSEJO SUPERIOR DE INVESTIGACIONES CIENTÍFICAS, M.P. (CSIC) - (TITULAR DEL 5%), 28006 Madrid (ES)
(72) Inventor: FABIAN PUERTA, Verónica - (Inventor al 30%, 08039 Barcelona (ES); RUEDA GARCÍA, Daniel - (Inventor al 30%, 08039 Barcelona (ES); BENAGES VILAU, Raúl - (Inventor al 10%, 08193 Bellaterra, Cerdanyola del Vallés ( Barcelona) (ES); GÓMEZ ROMERO, Pedro - (Inventor al 10%, 28006 Madrid (ES); TERRADAS ROBLEDO, Rafael - (Inventor al 10%, 08039 Barcelona (ES)
(74) Representative: Maldonado Jordan, Julia
(86) International application number: PCT/ES2021/070631
(87) International publication number: WO 2023/031488

(57) **Abstract**

The present invention relates to an electrical energy storage device including at least one electrical energy storage unit comprising two electrodes, one being an anode (6.3a) and the other being a cathode (6.3b), wherein the electrodes are based on an electroactive paste comprising carbon micro/nanoparticles (3.4) dispersed in an electrolyte, which, under pressure, provide a highly efficient electrical conductivity network though all the paste and, at the same time, act as a supercapacitor, and nanosized redox active elements (4.6) added to the carbon micro and nanoparticles (4.4) and an electrolyte (3.2 and 4.2); and a structure that applies a given degree of mechanical pressure to the electroactive paste.

## Description

### Field of invention

The present invention belongs to the field of electrical energy storage and provides a solution for developing new devices based on paste electrodes of micro/nanoparticles with a highly efficient electrical conductivity network under pressure that provide high power, cycle life and energy density.

### State of the art

Current batteries have big issues related with power, that is because they are based on an electro-ionic mechanism. This means that ions and electrons must be transferred simultaneously from one electrode to the other in order to store or deliver energy. As a consequence, electron transport is delayed by ion diffusion needed for electroneutrality, thus batteries cannot provide high power
On the other hand, supercapacitors are electrical energy storage devices with higher power than batteries, that is because the storing mechanism lies just on the electrode's surface through the formation of an electric double layer. There is no ion diffusion though the electrolyte and the active material as in batteries. However, due to the fact that charge is just stored on the electrode's surface the energy density of the supercapacitors is smaller than in batteries.

Cycle life is another issue for batteries, supercapacitors can easily reach 10⁴ - 10⁵ cycles, but current batteries limit is around 10³ cycles. Spurious reactions and phase changes in the active materials are the main reason for the smaller cycle life of batteries in comparison with supercapacitors, which just store charge through a "simple" electrostatic mechanism on the electrodes surface which produce a minimal wear.

Hybrid electrode materials combine components that act as supercapacitors and battery materials. These can be extended phases, clusters, molecules, or ions that can be reversely oxidized and reduced. Hybrid materials provide a solution to improve energy density, power, and cycle life at the same time thanks to the positive contribution of the combination of capacitive and redox mechanisms.

Furthermore, the electrode preparation has a strong impact on the performance of batteries but is also important for supercapacitors. Electrodes are generally based on a metallic current collector (Cu or Al) on top of which is cast a coating of a mixture of the active material, a conductive additive, and a binder. The thinner the coating, the better power, cycle life and energy density (per grams of coating). That is why the coatings used in current batteries are very thin, below 100 µm. Thicker electrodes lead to a poor performance especially in power and cycle life. When considering the optimal design of a whole device, thin electrodes are an important drawback because they imply the use of a large mass and volume of current collectors, and thus, just a relatively small part of the whole volume of batteries or supercapacitors is used to store charge.

Electrical conducting paste electrodes could help reduce that problem and, in addition, could save the energy and time needed to cast and dry the coating of the solid electrodes, making electrode fabrication easier, faster, and cheaper.

Therefore, thicker (paste) electrodes with good performance would be a real solution in order to improve the energy density of current energy storage devices by substantially increasing the amount of active material per volume of device.

### Brief description of the invention

A first aspect of the present invention relates to an electrical energy storage device including at least: two electrodes, one being an anode and the other being a cathode, wherein the electrodes are based on a mixture of an electrolyte with dispersed conductive additives and carbon micro/nanoparticles which acts as both: highly efficient electrical conductivity network and as a supercapacitor electroactive material. Nanosized redox active elements added to the carbon particles to get a hybrid material with hybrid electrochemical performance.

The electrical energy storage device according to the present invention might be further characterized in that the electrolyte is selected from the group consisting of an organic electrolyte, comprising a mixture of miscible organic solvents, or a high salt concentration aqueous solution.

The electrical energy storage device according to the present invention might also be characterized in that the electrolyte is a mixture of miscible organic solvents comprising at least one solvent with a high dielectric constant and at least one solvent with low viscosity.

The electrical energy storage device according to the present invention might be characterized in that the carbon micro/nanoparticles are selected from the group consisting of graphite, activated carbon, graphene, several layers of graphene, reduced graphene oxide, graphene oxide, single wall carbon nanotubes, multiwall carbon nanotubes, fullerenes, ketjen black, carbon black super p or mixtures thereof.

Furthermore, the electrical energy storage device according to the present invention might be characterized in that the nanosized redox active elements are selected from the group consisting of electroactive ions, electroactive molecules, metal-organic clusters, battery material nanoparticles or mixtures thereof.

The present invention also discloses an electrical energy storage device further characterized by at least one electrical energy storage unit which comprises two paste electrodes, one being an anode and the other being a cathode, and an inner structure composed of a first current collector, followed by a first rubber ring, a separator, a second rubber ring, and a second current collector, wherein the anode is confined inside the inner volume defined by the first rubber ring, and the cathode is confined in the inner volume defined by the second rubber ring, and wherein both current collectors have a thickness in the range of 1 µm to 500 µm and are made of a material highly resistant to corrosion. Both rubber rings are flexible and deformable, are chemically resistant to degradation by the paste electrodes, have a thickness of 250 µm to 2500 µm and a width of 1 mm to 10 mm, and confine both paste electrodes in their inner volumes, sealing the electrical energy unit to prevent the paste leaking at any pressure; and the thickness of both, the anode and the cathode, is less than or equal to the thickness of the rubber rings.

In a further embodiment, the electrical energy storage device according to the present invention is characterized in that the material of the current collectors is selected, among others, from metals and carbon materials.

The electrical energy storage device according to the present invention might be further characterized in that at least one electrical energy storage unit is stacked in a single body, wherein the pressure applied by the external body to the paste electrodes is up to 10000 kPa and is kept steady by the flexible and deformable rubber rings; the cathode current collectors are electrically connected in parallel through the connection part; and the anode current collectors are electrically connected in parallel through the connection part.

In a further embodiment, the electrical energy storage device according the present invention, further comprises a valve to maintain the desired pressure level inside the system at any moment.

### Brief description of the figures

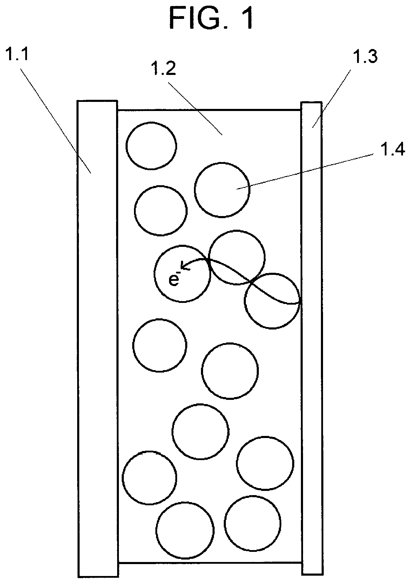

FIG. 1 is a schematic illustration of an active paste and its electrical percolation capability into one of the sides of the electromechanical cell without applying pressure, wherein (1.1) represents a separator, (1.2) an electrolyte, (1.3) a current collector and (1.4) a carbon particle.

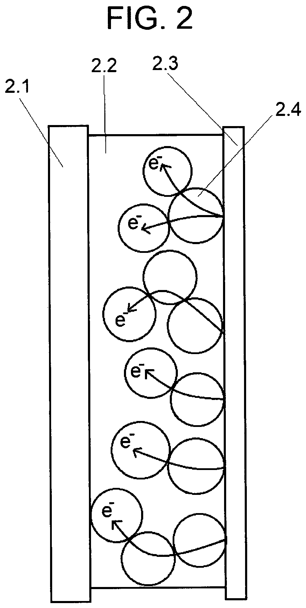

FIG. 2 is a schematic illustration, wherein (2.1) represents a separator, (2.2) an electrolyte, (2.3) a current collector and (2.4) a carbon particle, of an active paste and its electrical percolation capability into one of the sides of the electromechanical cell when pressure is applied.

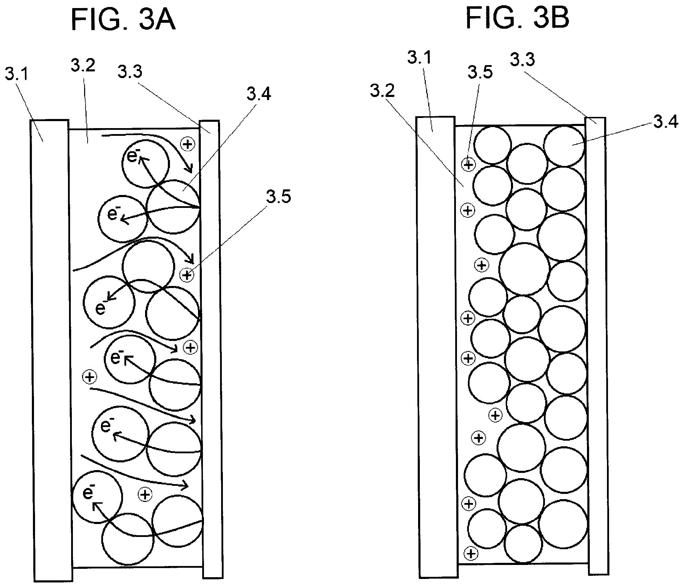

FIG. 3A is a schematic illustration of the capability of the counter ions (3.5) in the electrolyte (3.2) to reach all the active material in the current collector (3.3) in a paste electrode according to the present invention. FIG. 3b illustrates a classic solid electrode.

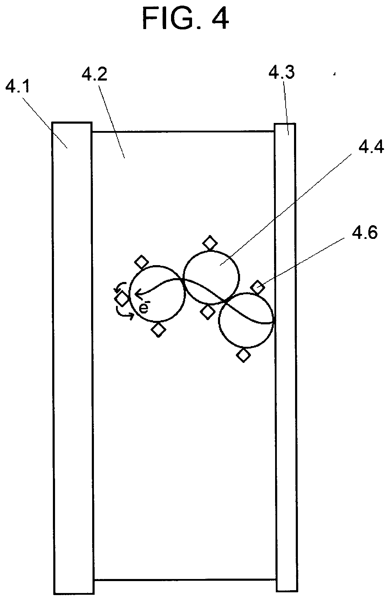

FIG. 4 is a schematic illustration of the reversible electron transference through the active carbon particles of the paste (4.4) to the nanosized redox active elements (4.6) added into the carbon particles (4.4) and the current collector (4.3).

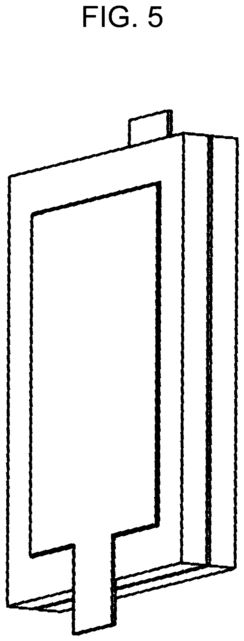

FIG. 5 is an isometric view of the electrical energy storage unit according to the invention.

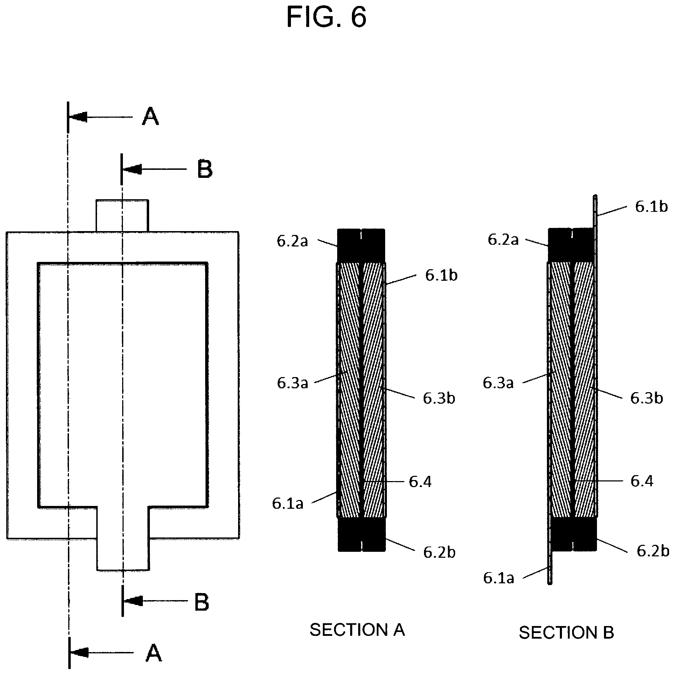

FIG. 6 illustrates a top view and two section views of the electrical energy storage unit where all its components are shown: anode current collector (6.1a), anode rubber ring (6.2a), anode paste (6.3a), separator (6.4), cathode paste (6.3b), cathode rubber ring (6.2b) and cathode current collector (6.1b).

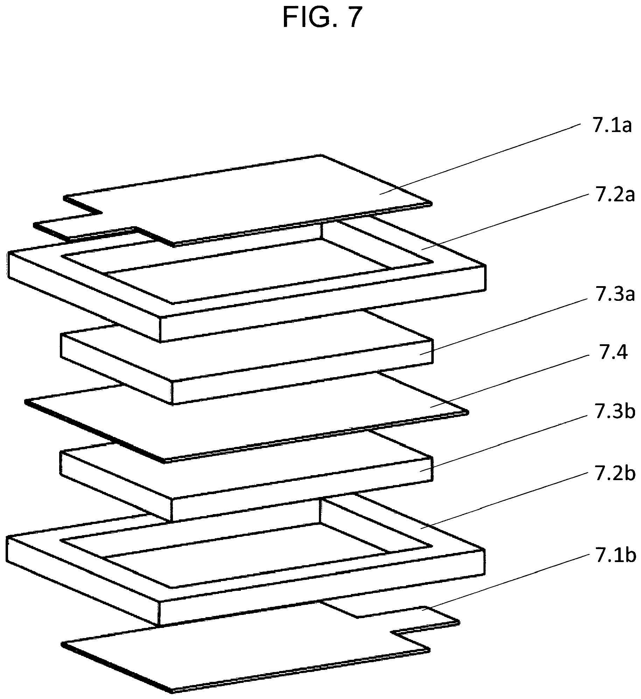

FIG. 7 shows an exploded view of the electrical energy storage unit with the following structure: anode current collector (7.1a), anode rubber ring (7.2a), anode paste (7.3a), separator (7.4), cathode paste (7.3b), cathode rubber ring (7.2b) and cathode current collector (7.1b).

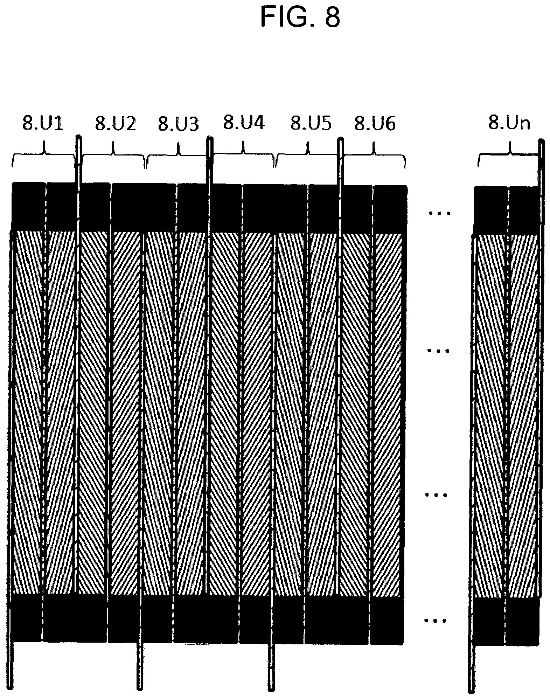

FIG. 8 is a section view of a stacking of the electrical energy storage units. This figure shows that a variable number of electrical energy storage units (8.Un, where n is at least one) can be stacked to meet the electrical requirements of the device.

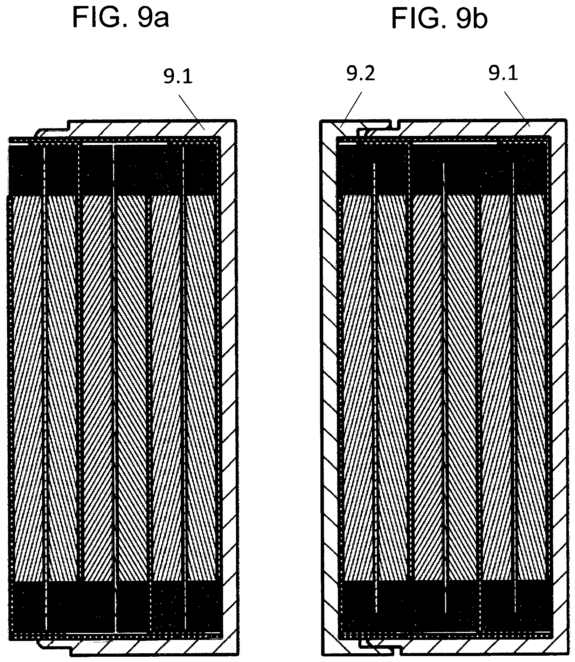

FIG. 9a illustrates a section view of a stack of electrical energy storage units fitted inside the device enclosure body (9.1) without the lid.
FIG. 9b illustrates a section view of a stack of electrical energy storage units fitted inside the device enclosure body (9.1) after a lid (9.2) is closed.

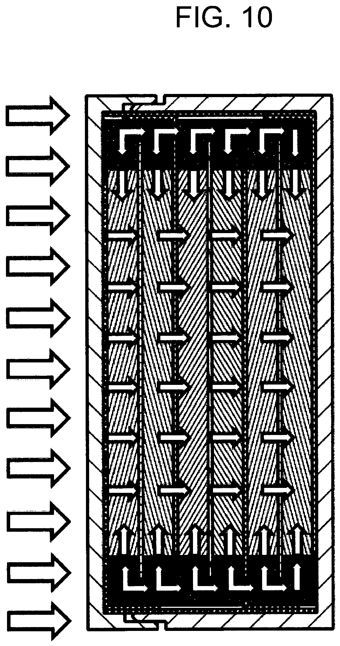

FIG. 10 shows the distribution of pressure on the paste inside the device once the enclosure is closed, including the pressure applied by the rubber rings when compressed.

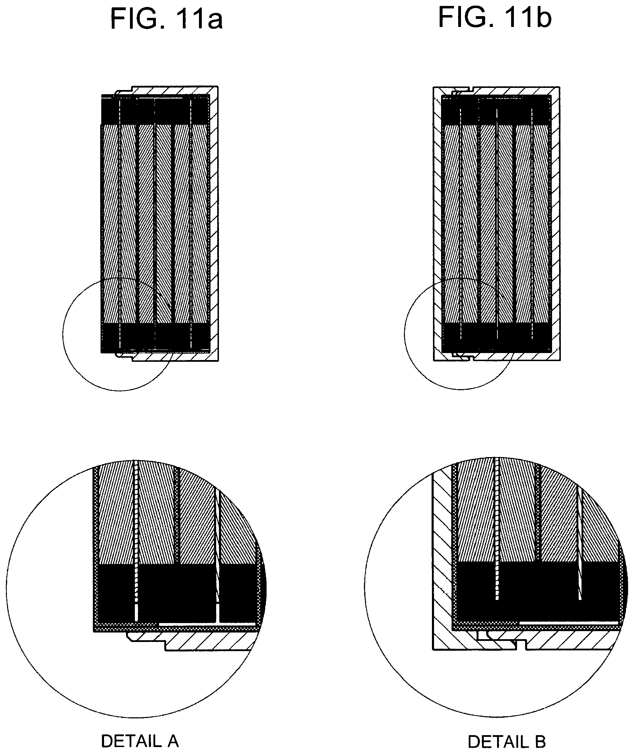

FIGS. 11a and 11b along with their detail views show how the rubber ring is deformed under the pressure applied by the lid when the electrical energy storage device is closed.
FIG. 12a shows the tab design for the anode current collectors (12.An, where n is at least one) and how they are connected through the connection part 12.Q1.
FIG. 12b shows the tab design for the cathode current collectors (12.Cn, where n is at least one), and how they are connected through the connection part 12.Q2.

### Detailed description of the invention

The present invention describes a new concept of electrical energy storage device based on two features: thick paste electrodes and hybrid electroactive materials, which will allow to increase the energy density, power, and cycle life of the electrical energy storage devices.

Thick electrodes allow a noticeable improvement in the amount of active material per volume of the device and thus an increase of its energy density. However, solid electrodes lose performance when the thickness is increased because there is a larger distance that ions need to travel through the solid active material, thus involving low power, low energy density and low cycle life in comparison with a thinner electrode. In this invention we propose the use of thick paste electrodes based on a dispersion of conductive additives and carbon micro/nanoparticles which acts as both: highly efficient electrical conductivity network and as a supercapacitor electroactive material instead of the solid and thin coating used in current commercial devices.

Because the active material is dispersed into the electrolyte the invention described here can be used as "thick" electrodes. Such thick paste electrodes are able to provide good performance even with a thickness of 2mm or more. That is possible due to ions of the electrolyte can easily reach all the active material particles dispersed in it, thus ions do not must diffuse large distances through a solid like happens in thick solid electrodes.

Carbon micro and nanoparticles are the main solid component of the presented pastes, they conform the backbone of the described pastes. They play two roles: acting as electronic conductive material and as electroactive material. First, they provide a percolation effect that allow an effective and fast flow of electrons from the current collector through all the particles dispersed acting providing highly efficient electrical conductivity though all the paste. Second, they act as a supercapacitor providing high power and an increased cycle life to the device. Must be pointed out that pressure is needed to reach the optimal percolation (thus best performance) between dispersed particles into the paste.

In addition to the above, nanosized active redox elements are added/embedded to the pastes in order to generate the hybrid materials with an improved capacity than the pure capacitive materials that conform the backbone of the paste electrode presented. They are combined/adsorbed within the carbon micro and nanoparticles backbone. Such combination of active redox elements might be one or more of adsorption, absorption, alloyed and/or intercalated. The active redox elements can be ions, molecules, atomic clusters, or nanoparticles, but nothing larger than them in order to maintain the high power and cycle life provided by the carbon backbone while increasing the energy density by their redox processes. The limitations in power and cycle life of current batteries will appear in the pastes if larger particles of a solid redox active material were added.

Summarizing, the functional features of the paste electrodes according to the present invention are the following:
- Pastes are based on an electroactive and electrically conductive carbon micro/nanoparticles that acts as supercapacitor, providing high power and life cycle. At the same time, under pressure, they provide highly efficient electrical conductivity through all the particles.
- Redox electroactive elements are added to the chosen carbon materials in order to increase the energy density of the system. These redox elements must be small and homogenously distributed on the carbon material in order to maintain the carbon supercapacitve mechanism as the main charge mechanism as well as the high power and high life cycle of the paste formulation. In other words, the redox electroactive elements are additives to carbon materials allowing to increase the charge of the system. As they are not large bulky particles, they are able to transfer charge with high power and do not suffer (or minimize) the phase changes issue, thus increasing its life cycle.
- Since the disclosed invention can be used as electrodes of a thickness of 1 or 2mm, the energy density of a device based on this functional nanopastes reaches the same order of magnitude of the current commercial batteries but boosts the power and life cycle.

The electrolyte of the disclosed pastes can be based in aqueous or a mixture of organics solutions:
The aqueous electrolytes in the present invention should have a remarkably high salt concentration, preferably above 5M. Due to this high salt concentration voltages larger than 1.2V can be applied (water splitting voltage limit), been plausible apply up to 4V.

Organic electrolytes usually have larger resistance than aqueous electrolytes, being several reasons for that: lower dielectric constant of the solvent, lower ionic mobility of the ions and higher viscosity of the solvent water. A mixture of organic solvents that solves this problem is disclosed here. Organic electrolytes according to the present invention are based in a high dielectric constant solvent, like N-methylformamide (NMF), and a low viscous solvent, like acetonitrile (MeCN). Preferably the low viscous solvent is the major component in the mixture of solvents.

The presented paste electrodes need to be under pressure with a homogeneous distribution under the current collectors in order to obtain a proper electrical percolation between carbon particles and provide the best performance. To meet these requirements a new kind of energy storage unit and an electrical energy storage device able to keep the paste under pressure are disclosed.

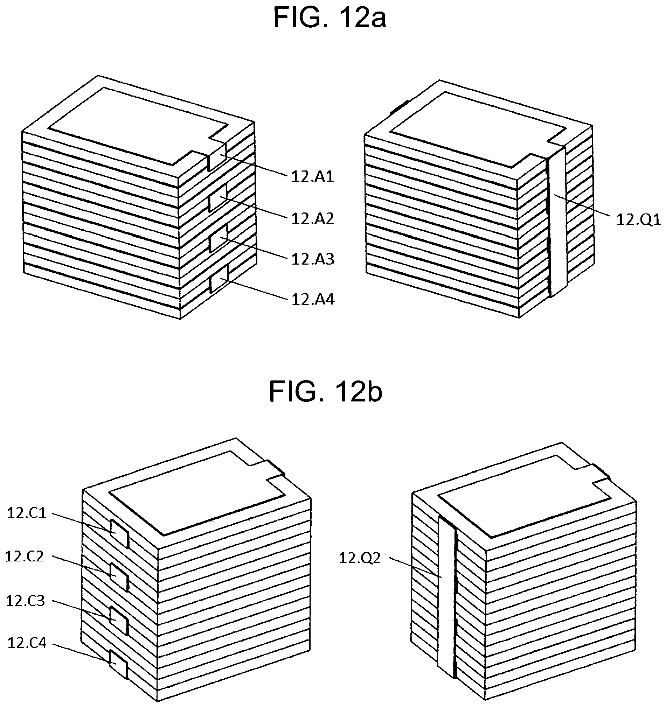

The electrical energy storage device is composed of a stack of electrical energy storage units electrically connected in parallel through the part Q or an external electrical circuit (as shown in figure 12a, 12b).

The enclosure of this device is made by electrically non-conductive materials, such as some plastics and polymers, and/or conductive materials such as metals, and carbon/glass fibre. The material may or may not have good screening properties. In addition, this enclosure may optionally have metallic reinforcements, external tensioners, or any other system to guarantee that the desired pressure is kept all over the hybrid paste inside the device. The rubber rings also help to reach the desired pressure on the paste and keep it steady when those rings are deformed under the load applied by the enclosure. The enclosure has exits to allow connecting the internal electrical circuits of the device to an external electrical circuit.

A closure system seals the device to prevent leakages in both ways. The electrical energy storage device may optionally include a valve to maintain the desired pressure level inside the system at any moment.

Every electrical energy storage unit is composed of a current collector followed by two rubber or elastomer rings separated by a separator, followed by another current collector that may optionally have the same geometry and characteristics as the previous one. The paste electrodes described above are contained within the inner volumes defined by the rubber rings, current collectors and the separator, and can behave as either anode or cathode depending on its position inside the electrical energy storage unit.

Current collectors might be sheets with a thickness in the range of 1 µm to 500 µm. The materials that can be used are materials with high corrosion resistance, in particular to the corrosion that may be caused by the direct exposure of some of the components to the electrolyte of the paste electrodes described above. Those materials include a variety of materials comprising carbon-based materials, including, but not limited to, carbon cloth, carbon paper, graphene, carbon nanotubes, carbon nanofibers, hard carbon, porous carbon; and a wide range of metallic materials such as stainless steel, platinum, gold, silver, tungsten and copper among others.

The current collectors associated with those pastes behaving as anode are electrically connected in parallel through the connection part 12.Q1 (FIG.12) to an external electric circuit; and are electrically isolated from those for the cathodes at the same time to prevent a short circuit. The same structure is followed by the current collectors associated with those pastes behaving as cathode, which are electrically connected in parallel through the connection part 12.Q2 (FIG.12).

The connection parts 12.Q1 and 12.Q2 can have a thickness in the range of 1 µm to 1000 µm. The material can be selected from a variety of materials comprising metallic materials, from stainless steel, platinum, gold, silver, tungsten to copper, as well as carbon based materials, including but not limited to carbon cloth, carbon paper, graphene, carbon nanotubes, carbon nanofibers, hard carbon, porous carbon.

The rubber rings that hold the paste electrodes have a thickness in the range of 250 µm to 2500 µm, and a width in the range of 1 mm to 10 mm. The materials used for its manufacture are flexible, deformable, and compressible materials, capable of withstanding the possible corrosion by the paste electrodes. Among them are included elastic materials with high chemical resistance like rubber.

The separator that isolates and avoids the short-circuit between the paste electrodes within every electrical energy storage unit is an ion-permeable membrane. In the assembly of the electrical energy storage unit, rubber rings clamp the separator, ensuring its position and isolating it from the environment, thus avoiding loss by capillarity and evaporation of part of the electrolyte of the paste electrodes and any other kind of leaking when pressure is applied.

## Claims

1. An electrical energy storage device based on paste electrodes under pressure comprising:
• Paste electrodes based on a mixture of an electrolyte with dispersed conductive additives and carbon micro/nanoparticles which acts as both: highly efficient electrical conductivity network and as a supercapacitor electroactive material. Nanosized redox active elements are added into the carbon micro/nanoparticles in order to get hybrid (capacitive + redox) materials with hybrid electrochemical performance.
• A sealed cell stacking that keep paste electrodes under a homogenous pressure and preserves the humid rheology of the paste electrodes.

2. The electrical energy storage device according to claim 1, wherein the electrodes are completed based on pastes based on a mixture of dispersed carbon micro/nano particles into an electrolyte, which under pressure provides, a highly efficient electrical conductivity network though all the paste.

3. The electrical energy storage device according to any one of claims 1 and 2, wherein dispersed carbon micro/nanoparticles into an electrolyte that conforms a highly efficient electrical conductivity network under pressure are selected from the group consisting of: graphite, activated carbon, graphene, several layers of graphene, reduced graphene oxide, graphene oxide, single wall carbon nanotubes, multiwall carbon nanotubes, fullerenes, ketjen black, carbon black super p or mixtures thereof.

4. The electrical energy storage device according to any one of claims 1 to 3, wherein the nanosized redox active elements added to the dispersed carbon micro/nanoparticles into an electrolyte that conforms a highly efficient electrical conductivity network under pressure are selected from the group consisting of: electroactive ions, electroactive molecules, metal-organic clusters, battery material nanoparticles or mixtures thereof.

5. The electrical energy storage device according to claims 1 or 4, wherein the electrolyte for a paste based on dispersed carbon micro/nanoparticles into the electrolyte that conforms a highly efficient electrical conductivity network under pressure is selected from the group consisting of an organic electrolyte, comprising a mixture of miscible organic solvents, or water-based electrolytes where the salt is the main component in mass.

6. The electrical energy storage device according to claim 1 to 5, wherein the electrolyte for a paste based on dispersed carbon micro/nanoparticles into the electrolyte that conforms a highly efficient electrical conductivity network under pressure is a mixture of miscible organic solvents comprising at least one solvent with a high dielectric constant (≥ 50) and at least one solvent with low viscosity (≤ 0.5 mPa·s).

7. The electrical energy storage device according to any one of claims 1 to 6, which is composed of at least one electrical energy storage unit which comprises:
- two paste electrodes, one being an anode (6.3a) and the other being a cathode (6.3b).
- a first current collector (6.1a), followed by a first rubber ring (6.2a), a separator (6.4), a second rubber ring (6.2b), and a second current collector (6.1b), wherein the anode (6.3a) is confined inside the inner volume defined by the first rubber ring (6.2a), and the cathode (6.3b) is confined in the inner volume defined by the second rubber ring (6.2b), thus the thickness of both, the anode and the cathode, is less than or equal to the thickness of the rubber rings, and wherein both rubber rings (6.2a and 6.2b) are flexible and deformable, are chemically resistant to degradation by the electroactive paste, have a thickness of 250 µm to 2500 µm, and have a width of 1 mm to 10 mm.

8. The electrical energy storage device according to any one of claims 1 to 7, wherein at least one electrical energy storage unit is stacked in a single body, wherein:
- the pressure applied by the external body to the paste electrodes is up to 10000 kPa.
- the pressure applied to the paste electrodes is kept steady by the flexible and deformable rubber rings (6.2a and 6.2b).
- the rubber rings (6.2a and 6.2b) confine both paste electrodes in their inner volumes, sealing the electrical energy unit to prevent the paste leaking at any pressure.
